# DEMANDE DE BREVET EUROPEEN

(11) **EP 2 886 847 A1**
(43) Date de publication de la demande: **24.06.2015**
(21) Numéro de dépôt: 14194846.3
(22) Date de dépôt: 26.11.2014
(51) Int. Cl.: F02N 9/04, B60K 6/12, B60T 1/10, F01L 1/46, B60L 1/00, F02N 7/00, F01L 13/04

(54) **Procédé d'aide au démarrage pour moteur hybride pneumatique**

(30) Priorité: 05.12.2013 FR 1362185
(71) Demandeur: PEUGEOT CITROËN AUTOMOBILES SA, 78140 Velizy-Villacoublay (FR)
(72) Inventeur: Novati, Jean, 78420 Carrieres sur Seine (FR)

(57) **Abrégé**

L'invention porte principalement sur un procédé d'aide au démarrage d'un moteur hybride pneumatique comportant un moteur thermique (10) et un réservoir pneumatique (11) communiquant avec des cylindres (12) dudit moteur thermique (10) par l'intermédiaire de soupapes pneumatiques (13), ledit procédé comportant l'étape d'injecter de l'air sous pression dans lesdits cylindres (12) depuis le réservoir pneumatique (11) en ouvrant les soupapes pneumatiques (13) dudit moteur thermique (10) de manière à augmenter une masse d'air enfermée dans lesdits cylindres (12) en phase d'admission, caractérisé en ce que ledit procédé comporte l'étape préalable de mettre en pression ledit réservoir pneumatique (11) par activation d'un démarreur (25) dudit moteur thermique (10), et ouverture desdites soupapes pneumatiques (13) en phase de compression lorsque la pression dans lesdits cylindres (12) devient supérieure à la pression dans ledit réservoir pneumatique (11).

## Description

La présente invention porte sur un procédé d'aide au démarrage pour moteur hybride pneumatique.

De façon connue en soi, un moteur hybride pneumatique est constitué d'un moteur thermique accouplé à un réservoir d'air comprimé. Ce réservoir communique avec les cylindres du moteur par l'intermédiaire de soupapes pneumatiques. Ce moteur présente au minimum trois modes de fonctionnement. Dans un premier mode de fonctionnement, dit mode thermique, le moteur convertit l'énergie contenue dans le carburant en travail mécanique. Dans un deuxième mode de fonctionnement dit mode pompe, le moteur convertit l'énergie mécanique (couple, régime) en énergie thermodynamique (pression, température) stockée dans le réservoir d'air comprimé que l'on appellera énergie pneumatique. Dans un troisième mode de fonctionnement, dit mode pneumatique, le moteur convertit l'énergie pneumatique en travail mécanique. La gestion du mode de fonctionnement est assurée par un calculateur qui interprète la demande en couple du conducteur et la convertit en commandes pour les différents actionneurs. Suivant la quantité d'énergie pneumatique stockée et la demande de couple moteur, le calculateur peut passer sélectivement d'un mode thermique à un mode pneumatique et inversement sans demande explicite de la part du conducteur.

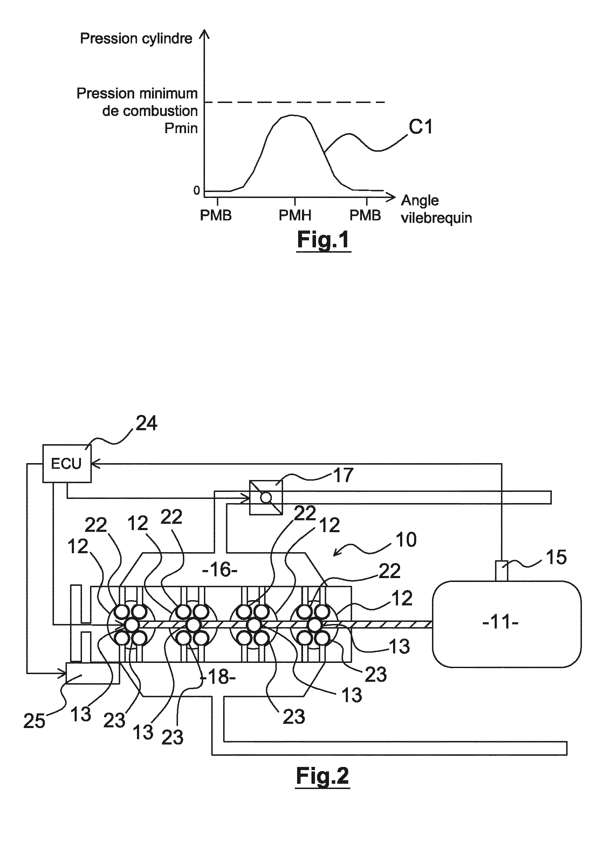

Dans certaines conditions climatiques sévères liées aux basses températures et/ou à l'altitude, le démarrage du moteur est rendu impossible car les températures et/ou les pressions en fin de phase de compression sont trop basses pour permettre d'initier la combustion. Le moteur reste alors bloqué à son régime sous démarreur sans jamais pouvoir atteindre son régime de ralenti. La figure 1 montre ainsi que la courbe C1 de la pression dans un cylindre en cas de conditions climatiques sévères ne dépasse pas la pression minimale Pmin permettant la réalisation de la combustion.

Les documents FR2527685 et EP1127217 décrivent des systèmes permettant d'injecter de l'air sous pression via un réservoir externe dans la chambre de combustion des cylindres d'un moteur thermique pendant la phase d'admission, pour augmenter le taux de compression et faciliter le démarrage du moteur.

La présente invention vise à garantir la présence d'air sous pression pour la réalisation du démarrage en proposant un procédé d'aide au démarrage d'un moteur hybride pneumatique comportant un moteur thermique et un réservoir pneumatique communiquant avec des cylindres dudit moteur thermique par l'intermédiaire de soupapes pneumatiques, ledit procédé comportant l'étape d'injecter de l'air sous pression dans lesdits cylindres depuis le réservoir pneumatique en ouvrant les soupapes pneumatiques dudit moteur thermique de manière à augmenter une masse d'air enfermée dans lesdits cylindres en phase d'admission, caractérisé en ce que ledit procédé comporte l'étape préalable de mettre en pression ledit réservoir pneumatique par activation d'un démarreur dudit moteur thermique et ouverture desdites soupapes pneumatiques en phase de compression lorsque la pression dans lesdits cylindres devient supérieure à la pression dans ledit réservoir pneumatique.

L'invention permet ainsi d'éviter les occurrences de non-démarrage en conditions climatiques sévères avec un moteur thermique à hybridation pneumatique. L'invention permet en outre d'augmenter aisément la pression dans le réservoir d'air comprimé par activation du démarreur afin que le réservoir puisse fournir une assistance pneumatique au moteur fonctionnant en mode thermique. L'invention peut être implémentée en modifiant uniquement le logiciel de commande du moteur, ce qui limite grandement le coût de sa mise en oeuvre.

Selon une mise en oeuvre, une injection de carburant dans lesdits cylindres est coupée lors de la mise sous pression dudit réservoir pneumatique.

Selon une mise en oeuvre, lesdites soupapes pneumatiques sont refermées à un point mort haut lors de la mise sous pression dudit réservoir pneumatique. Cela permet d'optimiser la quantité d'air communiquée au réservoir pneumatique.

Selon une mise en oeuvre, une injection de carburant est activée lors de l'injection d'air sous pression dans lesdits cylindres dudit moteur thermique.

Selon une mise en oeuvre, lors de l'injection d'air sous pression dans lesdits cylindres dudit moteur thermique, chaque soupape pneumatique est ouverte dès la fermeture d'une soupape d'entrée correspondante dudit moteur thermique.

Selon une mise en oeuvre, lors de l'injection d'air sous pression dans lesdits cylindres dudit moteur thermique, les soupapes pneumatiques sont refermées lorsque la pression dans lesdits cylindres dudit moteur devient supérieure à la pression dans ledit réservoir pneumatique.

Selon une mise en oeuvre, le procédé comporte en outre l'étape de stabiliser le moteur à un régime de ralenti.

Selon une mise en oeuvre, ledit procédé comporte l'étape de limiter progressivement l'injection d'air sous pression en réduisant une durée d'ouverture des soupapes pneumatiques.

L'invention sera mieux comprise à la lecture de la description qui suit et à l'examen des figures qui l'accompagnent. Ces figures ne sont données qu'à titre illustratif mais nullement limitatif de l'invention.

La figure 1, déjà décrite, représente une évolution de la pression à l'intérieur d'un cylindre dans une phase de compression et de détente dans le cas d'une tentative de démarrage en altitude;

La figure 2 est une représentation schématique d'un moteur hybride pneumatique mettant en oeuvre le procédé d'aide au démarrage selon la présente invention;

La figure 3 représente l'évolution en fonction du temps du régime moteur lors de la mise en oeuvre des différentes phases du procédé d'aide au démarrage selon la présente invention;

La figure 4 montre un profil d'activation de la soupape pneumatique en fonction d'un angle de vilebrequin lors de la mise sous pression du réservoir pneumatique;

La figure 5 représente l'évolution de la pression du réservoir pneumatique après chaque point mort haut lors de la phase de mise sous pression du réservoir pneumatique;

La figure 6 montre un profil d'activation de la soupape pneumatique lors de l'assistance pneumatique en phase d'admission.

Les éléments identiques, similaires, ou analogues conservent les mêmes références d'une figure à l'autre.

La figure 2 montre un moteur à hybridation pneumatique comportant un moteur thermique 10, ici à quatre cylindres 12, accouplé à un réservoir pneumatique 11 d'air comprimé. Le réservoir pneumatique 11 communique avec les cylindres 12 du moteur 10 par l'intermédiaire de soupapes pneumatiques 13. En l'occurrence, le moteur 10 comporte une soupape pneumatique 13 par cylindre 12. Le réservoir pneumatique 11 est équipé d'un capteur de pression 15 instantané permettant d'estimer sa charge en air.

Un collecteur d'admission 16 reçoit de l'air à introduire dans les chambres de combustion. L'air d'admission est aspiré depuis l'extérieur du véhicule, par l'intermédiaire d'un filtre à air (non représenté). Une vanne commandée 17 permet d'adapter la masse d'air nécessaire à la combustion du carburant introduit dans les cylindres 12.

Un collecteur d'échappement 18 reçoit les émissions de gaz produites par la combustion et les dirige vers une ligne d'échappement adapté à traiter les polluants avant leur expulsion vers l'atmosphère extérieure de façon connue en soi.

Les cylindres 12 présentent chacun de façon classique au moins une soupape d'entrée 22 pour la mise en relation du cylindre 12 avec le collecteur d'admission 16 et au moins une soupape de sortie 23 pour la mise en relation du cylindre 12 avec le collecteur d'échappement 18. Le moteur 10 comporte en l'occurrence deux soupapes d'entrée 22 et deux soupapes de sortie 23 par cylindre 12. Une injection de carburant à l'intérieur des cylindres 12 est effectuée au moyen d'injecteurs (non représentés). En outre, des bougies permettent d'enflammer le mélange d'air et de carburant à l'intérieur des chambres de combustion délimitée chacune par un piston et le cylindre correspondant.

Un calculateur 24 reçoit la mesure issue du capteur de pression 15 et assure notamment la commande de la vanne d'admission 17, des soupapes pneumatiques 13, ainsi que d'un démarreur 25 du moteur 10.

Le moteur 10 présente au minimum trois modes de fonctionnement. Dans un premier mode de fonctionnement, dit mode thermique, le moteur 10 convertit l'énergie contenue dans le carburant en travail mécanique. Dans un deuxième mode de fonctionnement dit mode pompe, le moteur 10 convertit l'énergie mécanique (couple, régime) en énergie thermodynamique (pression, température) stockée dans le réservoir 11 que l'on appellera énergie pneumatique. Dans un troisième mode de fonctionnement, dit mode pneumatique, le moteur 10 convertit l'énergie pneumatique en travail mécanique.

La gestion du mode de fonctionnement est assurée par le calculateur 24 qui interprète la demande en couple du conducteur et la convertit en commandes pour les différents actionneurs. Suivant la quantité d'énergie pneumatique stockée et la demande de couple moteur, le calculateur 24 peut passer sélectivement d'un mode thermique à un mode pneumatique et inversement sans demande explicite de la part du conducteur.

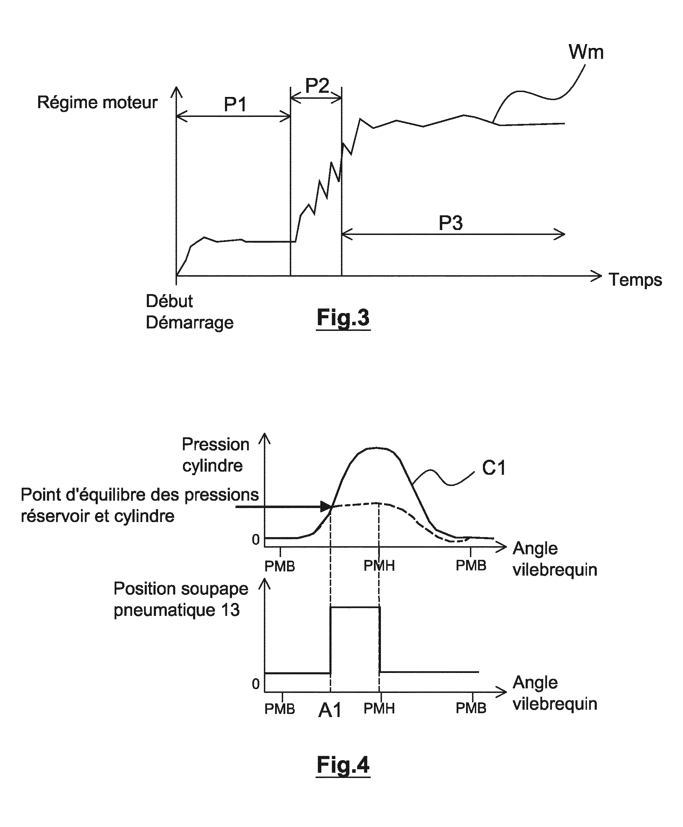

On décrit ci-après, en référence avec les figures 3 à 6, le procédé d'aide au démarrage du moteur hybride pneumatique en cas de conditions climatiques sévères.

Une première phase P1 consiste à mettre en pression le réservoir pneumatique 11. Cette phase P1 permet d'augmenter la pression dans le réservoir pneumatique 11 pour qu'il puisse par la suite fournir une assistance pneumatique au moteur thermique 10.

La phase P1 débute avec l'activation du démarreur 25. Le régime moteur Wm va alors progressivement augmenter jusqu'à atteindre son régime stabilisé sous démarreur (cf. figure 3). Durant cette phase P1, l'injection d'essence est coupée. Chaque cylindre 12 est donc uniquement alimenté en air frais.

La mise en pression du réservoir 11 peut alors être réalisée en ouvrant les soupapes pneumatiques 13 commandées par le calculateur 24 en phase de compression lorsque la pression dans les cylindres 12 devient supérieure à la pression dans le réservoir pneumatique 11, comme montré à la figure 4. L'angle d'ouverture A1 des soupapes 13 pourra être défini par une cartographie à deux dimensions en fonction de la pression ambiante et de la pression du réservoir pneumatique 11 et corrigée éventuellement par une table fonction de la température ambiante. Cet angle A1 correspond à l'angle que forme le vilebrequin par rapport à l'axe du piston, et est compris entre l'angle correspondant au point mort bas (PMB) du piston et l'angle correspondant au point mort haut (PMH) du piston.

L'air va alors être transféré des cylindres 12 vers le réservoir pneumatique 11 pendant le reste de la phase de compression du moteur. Les soupapes pneumatiques 13 sont de préférence refermées par le calculateur 24 au point mort haut PMH pour optimiser la quantité d'air communiquée au réservoir pneumatique 11.

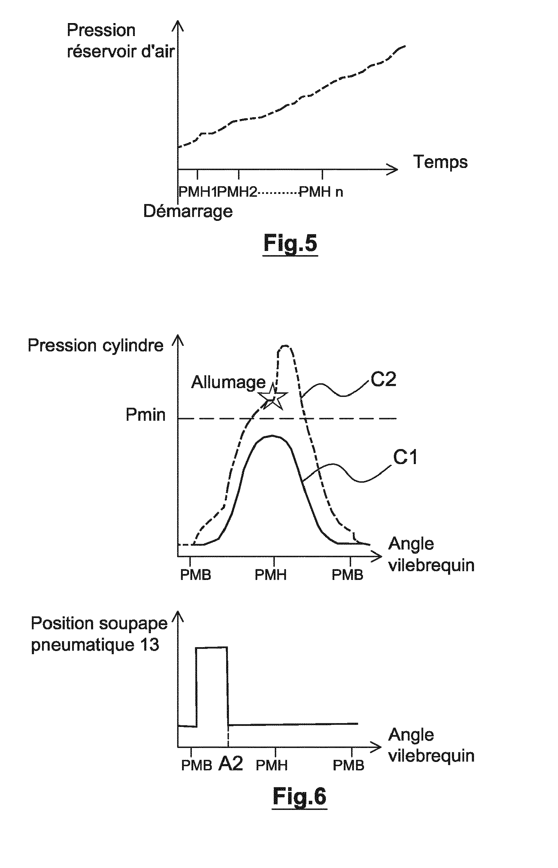

Comme cela ressort de la figure 5, la pression du réservoir 11 va augmenter à chaque point mort haut PMH du fait de l'introduction d'air sous pression issu des cylindres 12. Cette séquence prend fin lorsque la pression du réservoir 11 atteint un seuil calibrable. Ce seuil pourra dépendre de la pression et de la température ambiantes.

Une deuxième phase P2 d'assistance pneumatique permet d'augmenter la pression et la température des gaz en phase de compression du moteur 10 pour favoriser la combustion. Au début de cette phase, le moteur 10 est stabilisé à son régime Wm sous démarreur 25 (cf. figure 3) et l'injection de carburant dans les cylindres 12 est activée.

Pour augmenter la quantité d'air enfermée dans les cylindres 12, le calculateur 24 ouvre les soupapes pneumatiques 13 dès la fermeture des soupapes d'entrée 22, comme cela est illustré à la figure 6. La pression de la chambre de combustion va alors augmenter par rapport à une phase de compression classique, dans la mesure où la pression du réservoir pneumatique 11 est supérieure à celle de la chambre de combustion à ce moment. Les soupapes pneumatiques 13 sont refermées par le calculateur 24 lorsque la pression dans le cylindre 12 devient supérieure à la pression dans le réservoir 11.

L'angle de fermeture A2 de chaque soupape pneumatique 13 pourra être par exemple déterminé par une cartographie à deux dimensions en fonction de la pression du réservoir 11 et de la pression ambiante. Ce calcul d'angle de fermeture A2 pourra être corrigé par une table en fonction de la température ambiante. L'augmentation de pression en début de compression va alors permettre d'atteindre une pression et une température plus élevées favorisant ainsi la combustion du mélange air/carburant. On obtient ainsi la courbe C2 située au-dessus de la courbe C1 qui dépasse la pression minimum de combustion Pmin au moment où est réalisée la commande d'allumage représentée par une étoile sur la figure 6. Les combustions étant correctement réalisées, le régime moteur Wm va rapidement augmenter à chaque point mort haut PMH. La phase P2 se termine lorsque le régime moteur Wm atteint un seuil calibrable.

Une troisième phase P3 de retour au ralenti vise à stabiliser le moteur 10 à son régime de ralenti. L'assistance pneumatique va alors être progressivement désactivée par le calculateur 24 en réduisant la durée d'ouverture de chaque soupape pneumatique 13. La durée de désactivation des soupapes pneumatiques 13 pourra être calibrable. Comme dans la phase précédente P2, chaque soupape 13 va continuer à s'ouvrir à la fermeture de la soupape d'entrée 22 correspondante. Par contre, l'angle de fermeture A2 va être progressivement réduit par le calculateur 24 jusqu'à atteindre la durée minimale d'ouverture possible de l'actionneur. A partir de cet instant, les soupapes pneumatiques 13 ne seront plus activées, l'assistance pneumatique cesse et le moteur thermique 10 reprend un fonctionnement conventionnel.

Bien entendu, la description qui précède a été donnée à titre d'exemple uniquement et ne limite pas le domaine de l'invention dont on ne sortirait pas en remplaçant les détails d'exécution par tous autres équivalents.

## Revendications

1. Procédé d'aide au démarrage d'un moteur hybride pneumatique comportant un moteur thermique (10) et un réservoir pneumatique (11) communiquant avec des cylindres (12) dudit moteur thermique (10) par l'intermédiaire de soupapes pneumatiques (13), ledit procédé comportant l'étape d'injecter de l'air sous pression dans lesdits cylindres (12) depuis le réservoir pneumatique (11) en ouvrant les soupapes pneumatiques (13) dudit moteur thermique (10) de manière à augmenter une masse d'air enfermée dans lesdits cylindres (12) en phase d'admission, **caractérisé en ce que** ledit procédé comporte l'étape préalable de mettre en pression ledit réservoir pneumatique (11) par activation d'un démarreur (25) dudit moteur thermique (10), et ouverture desdites soupapes pneumatiques (13) en phase de compression lorsque la pression dans lesdits cylindres (12) devient supérieure à la pression dans ledit réservoir pneumatique (11).

2. Procédé selon la revendication 1, **caractérisé en ce qu'**une injection de carburant dans lesdits cylindres (12) est coupée lors de la mise sous pression dudit réservoir pneumatique (11).

3. Procédé selon la revendication 1 ou 2, **caractérisé en ce que** lesdites soupapes pneumatiques (13) sont refermées à un point mort haut lors de la mise sous pression dudit réservoir pneumatique (11).

4. Procédé selon l'une quelconque des revendications 1 à 3, **caractérisé en ce que** une injection de carburant est activée lors de l'injection d'air sous pression dans lesdits cylindres (12) dudit moteur thermique (10).

5. Procédé selon l'une quelconque des revendications 1 à 4, **caractérisé en ce que** lors de l'injection d'air sous pression dans lesdits cylindres (12) dudit moteur thermique (10), chaque soupape pneumatique (13) est ouverte dès la fermeture d'une soupape d'entrée (22) correspondante dudit moteur thermique (10).

6. Procédé selon la revendication 5, **caractérisé en ce que** lors de l'injection d'air sous pression dans lesdits cylindres (12) dudit moteur thermique (10), les soupapes pneumatiques (13) sont refermées lorsque la pression dans lesdits cylindres (12) dudit moteur (10) devient supérieure à la pression dans ledit réservoir pneumatique (11).

7. Procédé selon l'une quelconque des revendications 1 à 6, **caractérisé en ce qu'**il comporte en outre l'étape de stabiliser le moteur (10) à un régime de ralenti.

8. Procédé selon les revendications 5 et 7, **caractérisé en ce qu'**il comporte l'étape de limiter progressivement l'injection d'air sous pression en réduisant une durée d'ouverture des soupapes pneumatiques (13).
